# EUROPEAN PATENT SPECIFICATION

(11) **EP 3 632 787 B1**
(45) Date of publication and mention of the grant of the patent: **08.12.2021**
(21) Application number: 19201689.7
(22) Date of filing: 07.10.2019
(51) Int. Cl.: B63B 3/68, B32B 29/02, E04B 1/94, H02G 3/04, A62C 3/10

(54) **FIRE PROOF PANEL FOR BOATS AND THE LIKE**
BRANDSCHUTZPLATTE FÜR BOOTE UND DERGLEICHEN
PANNEAU COUPE-FEU POUR BATEAUX ET SIMILAIRES

(30) Priority: 05.10.2018 GB 201816272
(43) Date of publication of application: 08.04.2020
(73) Proprietor: Intumescent Systems Ltd, Dover Kent CT15 7JG (GB)
(72) Inventor: Ward, Derek, Dover, Kent CT15 7JG (GB)
(74) Representative: Fry, David John

(56) References cited:
- WO-A2-2006/083314
- GB-A- 2 299 054
- GB-A- 2 377 379
- GB-A- 2 531 598

## Description

### Field of invention

The present invention relates to fire proof panel assembly designed specifically for fibreglass or plastic bodies such as, for example, a boat. Fireproof panels are known for example from GB 2 299 054.

### Background to the invention

Boats are typically made from a fibreglass or plastic body. Electrics are housed within the fibreglass structure and are vulnerable to fire. It is necessary for the fibreglass or plastic bodies to be sealed to prevent ingress of water into the structure which would cause damage to the electrics. The heat build-up within the body structure is a major contributor to boat fires.

The Applicant has developed a unique fire proof assembly specifically for use on fibreglass or plastic body structures, to prevent fire from spreading across the entire boat structure.

The barrier may be retrofitted to existing fibreglass or plastic surfaces or units on the boat, or may be built into the structure at the point of its manufacture or construction.

The barrier may be provided over the entire surface of the boa or only on parts made form fibreglass or plastic and which are vulnerable to fire.

The barrier is formed from sheet panels to allow it to be adhered to the walls and sides of the body, the structure being, for the purposes of this description, a fibreglass or plastic body forming part of or all of the boat structure.

As the assembly has been primarily designed for boats and is therefore exposed to wet conditions, it is important that the outer surface of the assembly is made from a strong, hardy, non-slip material.

### Statement of invention

According to a first aspect of the invention, there is provided a fire proof panel for securement to a fibreglass or plastic body structure such as, for example, a boat, the panel comprising a layer of sponge material impregnated with water based intumescent material, one side of the sponge having adhered thereon a fire-resistant sheet of paper or cloth coated in an intumescent coating, the paper or cloth having adhered thereon a glass impregnated graphite cloth coated with a water and oil proof anti-static coating.

Preferably the panel is adhered to the fibreglass or plastic body using a water-based intumescent adhesive.

Preferably two or more fire proof panels are joined together, wherein a double coated graphite cloth coated on one side with an anti-static coating is provided between the joins of each panel.

### Brief description of the drawings

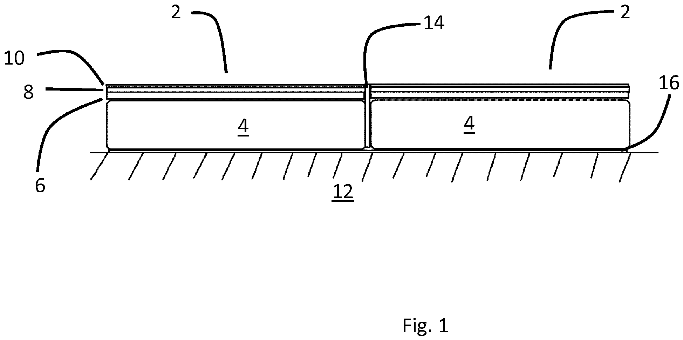

One embodiment of the invention will now be described by way of example only, with reference to the accompanying figure which is a side cross section view of panels constructed in accordance with the invention, joined to each other and secured to a fibreglass structure

### Detailed description of preferred embodiments

Referring to the figure, a fire proof barrier according to the invention comprises at least one layered panel structure 2 primarily consisting of a sponge layer 4 at least one side of which has attached thereon a fire-resistant sheet of paper or cloth 6 coated in an intumescent coating.

The sponge layer 4 preferably has a thickness of around 25mm to 30mm although it can be of any thickness suitable for its purpose. The paper 6 has a preferred thickness of 3mm to 6mm.

The sponge layer 4 consists of a non-fibrous sponge made from flexible polyurethane treated with flame retardants, particulate filler and polymeric bonding agents. The sponge 4 only chars in the event of fire and does not burn. The sponge 4 is incombustible, emits no toxic fumes and slowly degrades in the fire. The sponge 4 is impregnated with water bound intumescent material.

Adhered to the paper sheet 6 is a glass impregnated graphite cloth 8.

The graphite cloth 8 is coated with a water and oil proof anti-static coating 10.

The coating 10 may be a water-based paint comprising an aqueous dispersion based upon a polyvinylacetace.

The figure shows two square panels 2 joined together at their side edges. The panelling 2 could be formed in any shape or size, and can be cut to size to cover all areas requiring protection.

Panels 2 are joined together to form a single fire proof barrier over the entire fibreglass body 12. A double coated graphite cloth 14 coated on one side with an anti-static coating is provided between the joins of each panel 2.

The panels 2 are adhered to the fibreglass or plastic body 12 using a water-based intumescent adhesive 16. The adhesive is an intumescent acrylic thixotropic adhesive. The adhesive is a water based polymer material with inert fillers.

It will be understood, that the various embodiments described herein have been described by way of example only and that modifications may be made thereto without departing from the scope of the present invention as defined in the accompanying claims.

## Claims

1. A fire proof panel (2) for securement to a fibreglass or plastic body structure such as, for example, a boat, wherein the panel comprises a layer of sponge material (4) impregnated with water based intumescent material, one side of the sponge having adhered thereon a fire-resistant sheet of paper or cloth (6) coated in an intumescent coating, **characterized in that** the paper or cloth has adhered thereon a glass impregnated graphite cloth (8) coated with a water and oil proof anti-static coating (10).

2. A fire proof panel according to claim 1, wherein the panel is adhered to the fibreglass or plastic body (12) using a water-based intumescent adhesive.

3. Two or more fire proof panels according to claim 1 joined together, wherein a double coated graphite cloth (14) coated on one side with an anti-static coating is provided between the joins of each panel.

## Patentansprüche

1. Feuerfeste Platte (2) zur Befestigung an einer Glasfaser- oder Kunststoff-Körperstruktur, wie beispielsweise einem Boot, wobei die Platte eine Schicht aus Schwammmaterial (4) umfasst, die mit aufschäumendem Material auf Wasserbasis imprägniert ist, wobei eine Seite des Schwamms daran geklebt ein feuerbeständiges Blatt Papier oder Gewebe (6) aufweist, das mit einer aufschäumenden Beschichtung beschichtet ist, **dadurch gekennzeichnet, dass** das Papier oder Gewebe daran geklebt, ein glasimprägniertes Grafitgewebe (8) aufweist, das mit einer wasser- und öldichten antistatischen Beschichtung (10) beschichtet ist.

2. Feuerfeste Platte nach Anspruch 1, wobei die Platte unter Verwendung eines aufschäumenden Klebstoffs auf Wasserbasis an den Glasfaser- oder Kunststoffkörper (12) geklebt ist.

3. Zwei oder mehr feuerfeste Platten nach Anspruch 1, die miteinander verbunden sind, wobei zwischen den Verbindungen jeder Platte ein einseitig mit einer antistatischen Beschichtung beschichtetes, doppelt beschichtetes Graphitgewebe (14) vorgesehen ist.

## Revendications

1. Panneau ignifuge (2) destiné à être fixé à une structure de coque en fibre de verre ou en plastique telle que, par exemple, un bateau, dans lequel le panneau comprend une couche de matériau d'éponge (4) imprégné d'un matériau intumescent à base d'eau, une face de l'éponge ayant adhérée sur celle-ci une feuille de papier ou de tissu résistant au feu (6) revêtue dans un revêtement intumescent, **caractérisé en ce que** sur le papier ou tissu est adhéré un tissu de graphite imprégné de verre (8) revêtu d'un revêtement antistatique résistant à l'eau et à l'huile (10).

2. Panneau ignifuge selon la revendication 1, dans lequel le panneau est adhéré à la coque en fibre de verre ou en plastique (12) à l'aide d'un adhésif intumescent à base d'eau.

3. Deux panneaux ignifuges ou plus selon la revendication 1 joints les uns aux autres, dans lesquels un tissu de graphite à double revêtement (14) revêtu sur une face avec un revêtement antistatique est prévu entre les joints de chaque panneau.
